# EUROPÄISCHE PATENTSCHRIFT

(11) **EP 0 312 948 B1**
(45) Veröffentlichungstag und Bekanntmachung des Hinweises auf die Patenterteilung: **23.06.1993**
(21) Anmeldenummer: 88117212.6
(22) Anmeldetag: 15.10.1988
(51) Int. Cl.: C08F 10/00, C08F 2/00

(54) **Verfahren zur Herstellung von Niederdruckpolyolefinen mit verbesserter Restmonomeren- und Suspensionsmittelentgasung**
Process for the manufacture of low-pressure polyolefines with better devolatilization of residual monomers and dispersing agents
Procédé de préparation de polyoléfines basse pression à dégazage amélioré des monomères résiduels et des agents de dispersion

(30) Priorität: 23.10.1987 DE 3735937
(43) Veröffentlichungstag der Anmeldung: 26.04.1989
(73) Patentinhaber: BASF Aktiengesellschaft, 67063 Ludwigshafen (DE)
(72) Erfinder: Bullack, Horst, D-5047 Wesseling (DE); Bell, Hans, D-5047 Wesseling (DE); Wurzel, Manfred, D-5350 Euskirchen (DE); Oeder, Dieter, Dr., D-6719 Weisenheim (DE)

(56) Entgegenhaltungen:
- EP-A- 0 012 368
- DE-A- 1 495 492
- DE-C- 3 623 454
- US-A- 3 152 872
- US-A- 3 257 374

## Beschreibung

Die Erfindung betrifft ein Verfahren zur Herstelung von Niederdruckolefinpolymerisaten durch Polymerisation der Monomeren bei Drücken von 5 bis 50 bar und Temperaturen bis zu maximal 110°C in C₃- bis C₈-Kohlenwasserstoffen als Suspensionsmittel in einer Polymerisationszone, Abtrennen der entstandenen Polymerisate von der Hauptmenge des Suspensionsmittels und von nichtumgesetzten Monomeren in einer Entspannungszone durch Druckverminderung und Entfernen der Restanteile an Suspensionsmittel und Monomeren in einer Trocknungszone bei 1 bis 1,2 bar durch Einleiten eines Inertgasstromes.

Bei derartigen Verfahren werden Niederdruckolefinpolymerisate erhalten, die vom im Polymerisat gelösten Suspensionsmittel und Monomer weitgehend befreit sind.

Die Herstellung von Niederdruckolefinpolymerisaten wird großtechnisch nach verschiedenen Verfahren durchgeführt, so z.B. nach dem in der US-Patentschrift 3 152 872 beschriebenen Suspensionsverfahren. Die Polymerisation der Monomeren erfolgt dabei bei Drücken von 7 bis 48 bar und Temperaturen von bis zu 110°C in niedrigsiedenden Kohlenwasserstoffen (3 bis 8 C-Atome) als Suspensionsmittel. Zur Abtrennung des entstandenen Polymerisates vom Suspensionsmittel wird das Reaktionsgemisch in einen Entspannungsbehälter auf "Normaldruck" (≈ 1,2 bar) entspannt. Die Temperatur im Entspannungsbehälter liegt bei ca. 65°C. Unter diesen Bedingungen trennen sich die nicht umgesetzten Monomeren und das Suspensionsmittel als Gas vom Polymerengrieß ab und werden in den Prozeß rückgeführt. Das Polymerisat durchläuft nach dem Entspannungsbehälter einen beheizten Wendelförderer, der unter dem gleichen Druck wie der Entspannungbehälter betrieben wird. Aus diesem Förderer gelangt das Polymerisat über 2 hintereinander geschaltete Zellenräder in einen weiteren Wendelförderer, in den zur weiteren Entfernung der flüchtigen Kohlenwasserstoffe ein Inertgasstrom (CO₂; N₂) eingeleitet wird. Zwischen die beiden Zellenräder muß durch Einleiten eines Kohlenwasserstoffstromes verhindert werden, daß Fremdgase aus dem zweiten in den ersten Wendeltrockner gelangen. Diese würden auf dem Weg über den Entspannungsbehälter und die Kohlenwasserstoffrückführung in den Reaktor gelangen und den Katalysator vergiften.

Die bekannte Verfahrensweise weist aber folgende Nachteile auf:
1. Die Entfernung der Restmonomeren und des Suspensionsmittels gelingt nur in eingeschränktem Umfang, d.h., der den Entgasungsteil verlassende Polymerisatgrieß besitzt noch relativ hohe Anteile an flüchtigen Kohlenwasserstoffen. Diese müssen aus Sicherheitsgründen entfernt werden, wozu üblicherweise ein nachgeschalteter Verfahrensschritt, z.B. Entgasung über längere Zeit in einem Silo oder Entgasung aus der Schmelze, notwendig ist. Dies verursacht neben zusätzlichen Kosten beträchtliche Emissionen.
2. Die nach dem bisherigen Stand der Technik üblichen Absperrorgane am Ausgang des Entspannungsbehälters weisen normalerweise hohe innere Leckraten auf. Dadurch treten erhebliche Mengen Kohlenwasserstoffgase aus dem Entspannungsbehälter über die beiden Wendeltrockner ins Freie aus. Dies führt ebenfalls zu Emissionen und zu einem Verlust an Suspensionsmittel.
3. Die Entspannung des Reaktorinhaltes von Reaktionsdruck auf möglichst niedrigen Druck ist zwar im Hinblick auf eine möglichst gute Entgasung des Polymerisats wichtig, hat aber den Nachteil, daß zur Rückverdichtung der im Kreis geführten Kohlenwasserstoffe viel Energie notwendig ist.

Aus diesen Nachteilen resultierte die Aufgabenstellung, den Restgasgehalt im Polymerisat ohne zusätzlichen Verfahrensschritt zu reduzieren und die Rekompression des Kreisgases energetisch zu optimieren.

Diese Aufgabe wurde gelöst durch ein Verfahren bei dem der Druck in der Entspannungszone auf 1,5 bis 3 bar vermindert wird und daß man Entspannungs- und Trocknungszone mittels einer gasdichten Zellenradschleuse verbindet.

Bevorzugt ist ein Verfahren, bei dem der Druck in der Entspannungszone auf 1,5 bis 2 bar vermindert wird.

Bevorzugt ist ferner ein Verfahren, bei dem die Trocknungszone aus zwei in Reihe angeordneten Zonen besteht und beide Zonen im Gegenstrom mit dem Inertgas durchspült werden.

Verfahren zur Herstellung von Niederdruckolefinpolymerisaten bei Drücken von 5 bis 50 bar und Temperaturen bis zu 110°C, in C₃- bis C₈-Kohlenwasserstoffen, in einer Polymerisationszone sind so bekannt, daß sich eine ausführliche Beschreibung erübrigt. [vgl. z.B. Ullmanns Encyklopädie der technischen Chemie, 4. Auflage, (1980), Band 19, Seiten 178 bis 186 oder Encyclopedia of Polymer Science and Engineering, 2. Auflage, (1986), Band 6, Seiten 436 bis 438]. Die Polymerisation wird z.B. in Gegenwart von anionisch-koordinativen Trägerkatalysatoren auf Chrombasis vorgenommen, die Polymerisationszone ist bevorzugt als sog. Schleifenreaktor ausgebildet. Die nach diesem Verfahren erhaltenen Olefinpolymerisate weisen Dichten im Bereich von 0,940 bis 0,965 g/cm³ auf. Die entstandene Mischung aus Polyolefin, Restmonomer und Suspensionsmittel wird in eine Entspannungszone, die als übliches Entspannungsgefäß ausgebildet ist, geführt, wo nach üblicher Verfahrensweise ein Druck von ca. 1,2 bar oder weniger herrscht. Von hier aus gelangt der Polymerisatgrieß, der noch Restanteile an Suspensionsmittel und Monomer enthält, in eine Trocknungszone, in der ein Druck von 1 bis 1,2 bar besteht. Die in der Entspannungszone abgetrennten Monomeren und das abgetrennte Suspensionsmittel werden in den Prozeß zurückgeführt. In der Trockungszone herrscht gewöhnlich eine Temperatur zwischen 65 und 80°C, die Trocknung selbst kann z.B. in Wendeltrocknern in einem Strom aus Inertgas vorgenommen werden. Als Inertgas ist Stickstoff oder Kohlendioxid bevorzugt.

Nach erfindungsgemäßem Verfahren wird der Druck in der Entspannungszone auf 1,5 bis 3 bar vermindert und man verbindet die Entspannungs- und Trocknungszone mittels einer gasdichten Zellenradschleuse. Bevorzugt ist der Druck in der Entspannungszone auf 1,5 bis 2 bar vermindert. Bevorzugt ist auch ein Verfahren, bei dem die Trocknungszone aus zwei in Reihe angeordneten Zonen besteht und bei dem beide Zonen im Gegenstrom mit dem Inertgas durchspült werden.

Im einzelnen wird das erfindungsgemäße Verfahren folgendermaßen ausgeführt:
In den Auslaufstutzen des Entspannungsbehälters, d.h. vor den ersten Wendeltrockner, wird eine gasdichte Zellenradschleuse eingebaut, wie sie im DE-Patent 3 623 454 beschrieben ist. Dadurch ist es möglich, den Druck im Entspannungsbehälter bis auf 3 bar zu belassen, ohne daß merkliche Mengen Kohlenwasserstoffe in die nachgeschalteten Aggregate eintreten. Die beiden Zellenräder zwischen erstem und zweitem Wendeltrockner sowie die dazwischen liegende Einspülung von Kohlenwasserstoffgas werden ausgebaut und beide Wendeltrockner mit Stickstoff zur besseren Restentgasung gespült. Es hat sich als besonders vorteilhaft erwiesen, den Stickstoff am Ausgang des zweiten Wendeltrockners einzuspeisen und ihn im Gegenstrom zum Polymergrieß zu führen. Unterhalb des gasdichten Zellenrades am Entspannungsbehälter tritt der Stickstoffstrom aus dem System aus und wird einem Wärmetauscher zugeführt, in dem die Kohlenwasserstoffe bei Temperaturen von ca. -60°C auskondensiert werden. Der Druck in den beiden Wendeltrocknern wird auf ca. 1 bar, die Temperatur durch Mantelheizung auf 80 bis 90°C eingestellt. Durch das gasdichte Zellenrad und den wesentlich höheren Druck im Entspannungsbehälter im Vergleich zu den Wendeltrocknern wird verhindert, daß Katalysatorgifte in den Polymerisationskreislauf gelangen.

Aus dem zweiten Wendeltrockner wird das Polymerisat über ein weiteres Zellenrad einer pneumatischen Förderleitung zur Weiterverarbeitung zugeführt. Hier kann wegen des sehr niedrigen Kohlenwasserstoffgehaltes an der Stelle der Polymerisataufgabe ins Zellenrad (der Frischstickstoff wird an dieser Stelle eingespeist) ein Zellenrad bisher üblicher Bauart eingesetzt werden. Um auch geringste Mengen Kohlenwasserstoffe noch aus der Abluft fernzuhalten, kann natürlich auch ein gasdichtes Absperrorgan, wie beschrieben, eingesetzt werden.

### Vergleichsbeispiel

Es wird verfahren wie in der US-Patentschrift 3 152 872.

In einem Schleifenreaktor von 30 m³ Volumen werden in Isobutan als Suspensionsmittel durch Zugabe eines Cr-haltigen Katalysators 99,5 Gew.% Ethylen und 0,5 Gew.% Buten bei 105°C und 40 bar Druck copolymerisiert. Das entstandene Produkt hat eine Dichte von 0,945 g/cm³ und einen Meltindex (190°/21,6 kg) von 6 g/10 min. Das Polymerisat wird zusammen mit dem Suspensionsmittel und nicht umgesetzten Monomeren kontinuierlich aus dem Reaktor entspannt. Der Druck im Entspannungsbehälter beträgt 1,05 bar, die Temperatur 90°C. Im ersten Wendeltrockner herrschen die gleichen Druck- und Temperaturbedingungen. Im zweiten Wendeltrockner wird zusätzlich durch Einspeisung von 150 Nm³/h Stickstoff der Kohlenwasserstoffpartialdruck erniedrigt.

Der aus dem zweiten Wendeltrockner austretende Polymergrieß enthält noch 250 ml gasförmige Kohlenwasserstoffe pro Kilogramm Feststoff, die mit der Förderluft bzw. Bunkerabluft ins Freie austreten.

Der Suspensionsmittelverlust durch nicht genügende Entgasung und Leckageverlust an den Zellenrädern beträgt bei dieser Verfahrensweise ca. 16 kg pro Tonne Polyethylen.

### Beispiel

Man polymerisiert in der gleichen Weise wie oben 99,5 Gew.% Ethylen und 0,5 Gew.% Buten.

Der Reaktorinhalt wird in den Entspannungsbehälter auf 2 bar entspannt, die Temperatur beträgt 90°C. Am Ausgang des Entspannungsbehälters befindet sich ein gasdichtes Zellenrad. In den beiden daran anschließenden Trocknern wird ein Druck von 1,05 bar eingestellt, die Temperatur bei 90°C belassen. Durch die beiden Trockner wird im Gegenstrom 150 Nm³/h Stickstoff geleitet.

Der Polymergrieß hat nach Verlassen des zweiten Trockners nur noch einen Restkohlenwasserstoffgehalt von 10 ml pro Kilogramm.

Der Verlust an Suspensionsmittel reduziert sich bei dieser Verfahrensweise auf ca. 5 kg pro Tonne Polyethylen.

Die Einsparung an Energie für die Rückverdichtung der Kohlenwasserstoffe aus dem Entspannungsbehälter in den Reaktor liegt auf Grund des höheren Druckes im Behälter je nach Zusammensetzung des Kreisgases bei 10 bis 20%.

## Patentansprüche

1. Verfahren zur Herstellung von Niederdruckolefinpolymerisaten durch Polymerisation der Monomeren bei Drücken von 5 bis 50 bar und Temperaturen bis zu maximal 110°C in C₃- bis C₈-Kohlenwasserstoffen als Suspensionsmittel in einer Polymerisationszone, Abtrennen der entstandenen Polymerisate von der Hauptmenge des Suspensionsmittels und von nicht umgesetzten Monomeren in einer Entspannungszone durch Druckverminderung und Entfernen der Restanteile an Suspensionsmittel und Monomeren in einer Trocknungszone bei 1 bis 1,2 bar durch Einleiten eines Inertgasstromes, dadurch gekennzeichnet, daß der Druck in der Entspannungszone auf 1,5 bis 3 bar vermindert wird und daß man Entspannungs- und Trocknungszone mittels einer gasdichten Zellenradschleuse verbindet.

2. Verfahren nach Anspruch 1, dadurch gekennzeichnet, daß der Druck in der Entspannungszone auf 1,5 bis 2 bar vermindert wird.

3. Verfahren nach Anspruch 1, dadurch gekennzeichnet, daß die Trocknungszone aus zwei in Reihe angeordneten Zonen besteht und beide Zonen im Gegenstrom mit dem Inertgas durchspült werden.

## Claims

1. A process for the preparation of a high density olefin polymer by polymerization of the monomers under from 5 to 50 bar and at not more than 110°C in a C₃-C₈-hydrocarbon as a suspending agent in a polymerization zone, isolation of the resulting polymer from the bulk of the suspending agent and from unconverted monomers in a let-down zone by pressure reduction, and removal of the residual amounts of suspending agent and monomers in a drying zone under from 1 to 1.2 bar by passing in a stream of inert gas, wherein the pressure in the let-down zone is reduced to 1.5-3 bar, and the let-down zone and drying zone are connected by means of a gas-tight rotary feeder.

2. A process as claimed in claim 1, wherein the pressure in the let-down zone is reduced to 1.5-2 bar.

3. A process as claimed in claim 1, wherein the drying zone consists of two zones arranged in series, and the inert gas is passed counter-current through both zones.

## Revendications

1. Procédé de préparation de polymères d'oléfines basse pression par polymérisation des monomères sous des pressions de 5 à 50 bar et à des températures de 110°C au maximum, dans des hydrocarbures servant de milieu de suspension, dans une zone de polymérisation, séparation des polymères formés d'avec la majeure partie du milieu de suspension et des monomères n'ayant pas réagi, dans une zone de détente, par abaissement de la pression, et élimination des parties restantes de milieu de suspension et de monomères dans une zone de séchage, sous 1 à 1,2 bar, par passage d'un courant de gaz inerte, caractérisé en ce que la pression dans la zone de détente est réduite à 1,5-3 bar, et en ce qu'on relie les zones de détente et de séchage au moyen d'un sas à roue cellulaire étanche aux gaz.

2. Procédé selon la revendication 1, caractérisé en ce que la pression dans la zone de détente est réduite à 1,5-2 bar.

3. Procédé selon la revendication 1, caractérisé en ce que la zone de séchage se compose de deux zones disposées en série, et en ce que ces deux zones sont balayées à contre-courant par le gaz inerte.
